# EUROPEAN PATENT SPECIFICATION

(11) **EP 1 468 917 B1**
(45) Date of publication and mention of the grant of the patent: **13.12.2006**
(21) Application number: 03012677.5
(22) Date of filing: 04.06.2003
(51) Int. Cl.: B65B 39/00, B65G 69/18, B65D 90/62

(54) **Discharge and dosing device for the transfer of flowable material between two containers**
Austrag-und Dosiereinrichtung zum Übertragen von fliessfähige Materialien zwischen zwei Behältern
Dispositif de décharge et dosage pour le transfert de matière fluide entre deux conteneurs

(30) Priority: 15.04.2003 IT MI20030782
(43) Date of publication of application: 20.10.2004
(73) Proprietor: MANES MACCHINE S.r.l., 20135 Milano (IT)
(72) Inventor: Benvenuti, Marco, 20154 Milano (IT)
(74) Representative: Faraggiana, Vittorio

(56) References cited:
- EP-A- 0 550 199
- EP-A- 0 685 155
- EP-A- 0 760 447
- WO-A-01/53176
- WO-A-98/43902
- GB-A- 2 368 578
- US-A- 5 118 242

## Description

This invention relates to a discharge and dosing device for the transfer of flowable material from a container to another. Particularly, the device of the invention makes it possible the complete product transfer, or in a prefixed quantity for further handling, from a container to another without contaminating the surrounding environment or the product itself.

The primary container could be an hopper, a silo, a drum, a mobile container or a separating cyclone, while the receptacle could be a drum, a silo, a mobile container, an hopper, a processing machine.

The product to be discharged, dosed or transferred could be powder, granular, pasty, liquid, gaseous or slurry material, etc. able to flow, generally called "flowable". The containers are usually a storage container, such as for ex. a silo or an intermediate transportable container, used to store or transfer the material somewhere else. The two containers, and particularly their openings are overlapped during material flow from one to another.

This invention is largely adopted in the chemical-pharmaceutical, food and plastic material industry, and in general wherever dangerous material is used, i.e. material that can contaminate the surrounding environment or that can be contaminated itself.

As far as product discharge and dosing are concerned, this device is well known, but it needs an external discharge station to open the container cone closing valve. In this case the valve opening movement is carried out by moving the cone from the bottom upwards, i.e. inside the container, as illustrated for example in EP-A-0550199. Also the seal mounted on the cone is inside the container; therefore it can be hardly cleaned and overhauled.

As far as product transfer between two containers is concerned, there is a well-known device including a first container equipped with an opening that is closed by a cone valve, with peripheric seal means, that houses the material to be transferred to a second container. The latter is equipped with an upper cap raisable with peripheric seal. Inside the cone valve there is a hollow rod, ending with a sucker, that is connected to vacuum means to hook and lift the receptacle cap and to keep it inside. By raising the cone valve through a bellows, the product transfer from the first to the second container is obtained.

Drawback of this system is that it is sensitive to the vacuum generated to keep the cap fixed to the sucker. As a matter of fact, the vacuum could be insufficient or could become inefficacious because of the dust lying on the lid. If the sucker seal is insufficient, the device cannot work correctly. Moreover, the sucker is wearable.

Since the cone closing valve is housed inside the container, it can hardly be reached and removed.

A further discharge and dosing device according to the preamble of claim 1, is disclosed by US 5, 118, 242, wherein the cap of the lower container is pushed inside the container by suitable opening means mounted on the structure supporting the slidable valve of the upper container. However, this structure is quite complex and does not allow a direct access to the upper valve.

This invention aims at overcoming all the drawbacks of well-known systems, particularly by using a discharge and dosing device of a flowable product, with easy and reliable construction and good seal easy to overhaul.

In the device according to the invention, the receptacle lid is only pushed and a great reliability of the device is obtained. The danger that the deposit of dust or any other material prevents it from right working is thus eliminated. Moreover, the upper container opening is free of hindrances during the discharge and it's possible to overhaul and remove the seal and the cone of the upper container easily. According to the invention, this occurs through a discharge and dosing device, according to the claim 1. Further advantageous features are the subject-matter of dependent claims.

The invention is hereinafter described with reference to its favourite realizable but not restrictive form, shown in the attached drawings, i.e.:
Fig. 1 is a partial and partially sectional view showing the device according to the invention applied to two containers;
Fig. 2 is a partial sectional view showing the transfer and particularly material discharge;
Figs. 3A and 3B show schematically material dosing;
Figs. 4 and 5 show schematically material transfer.

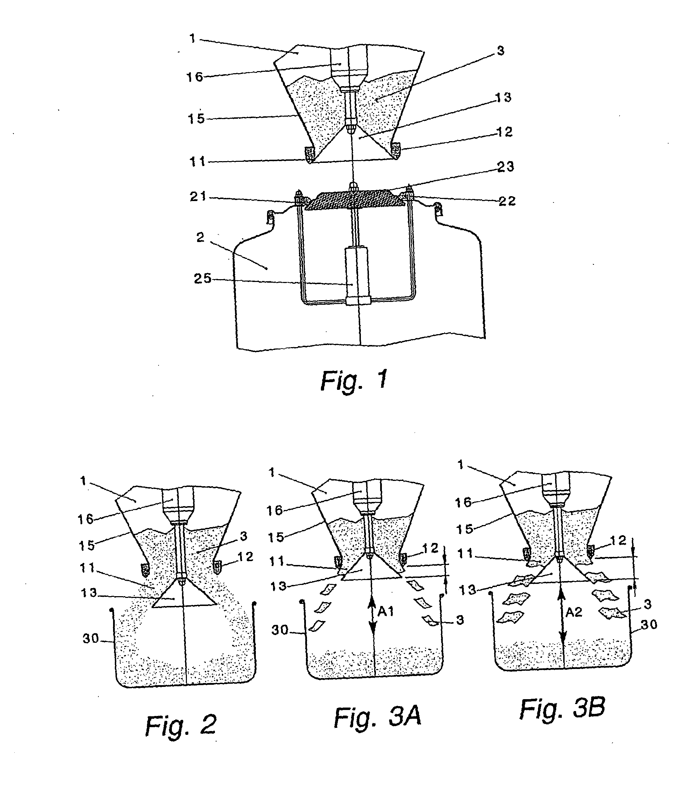

With initial reference to Fig. 1, the invention includes a first container 1 or upper container for product storage, containing flowable material 3. The container 1 is equipped with a lower hopper 15 from that opening 11 material 3 can flow out. The opening 11 is equipped with a peripheric seal 12 or more generally with seal means extending on the opening edge.

Container 1 is equipped with a conic-shaped discharge valve 13, vertically movable through a device 16, from a closing position where it abuts against the peripheric seal 12 (see Fig. 1), to a lower position, i.e. moving away from the container, where it partially opens the opening 11 (see Fig. 2).

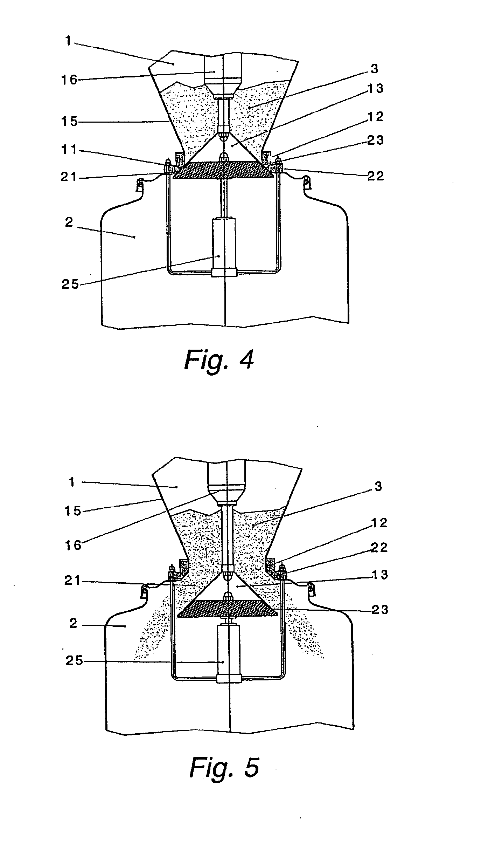

The lower container 2 is equipped with an opening 21 with a peripheric seal 22 or more generally with sealing means extending on the opening edge 21. In the container 2 there is a closing group equipped with a conical or frusto-conical cap 23 and a return device 25. The cap can be moved from a position spaced from the opening edge 21 (Fig. 5), to an abutting position, see Fig. 1. In particular, when the hopper 15 of the container 1 is in contact with the container 2, the seals 12 and 22 are in mutual contact and isolate the interior of the container from the surrounding environment.

Containers 1 and 2 are movable in correlation with each other both horizontally and vertically, through conventional means and are not shown in the figures. Such as for ex., container 1 can be a silo in a fixed position and container 2 can be a mobile transfer container on a conveyor and it is vertically liftable when the two openings 11, 21 are overlapped until the respective seals are used 12, 22, carrying out a seal between them. Alternatively, the upper container 1 can be mobile, or a suitable combination of relative mobility between them both orizontally and vertically can be carried out.

The actuator 16 is a well-known type, such as mechanical, electrical or pneumatic with simple or double effect, while the return device 25 can include one or more mechanical, pneumatic, hydraulic springs, etc. and they are no more described in detail.

Actuator 16 is combined to means able to adjust the opening path of the a.m. cone valve, i.e. the extent of its vertical movement. It's also combined to means to repeat, with prefixed adjustable frequency, a cycle of opening/closing of the a.m. cone valve, i.e. a movement from the closed position to the open position and vice versa.

Hereinafter a short description of the main operations feasible with the device according to the invention, i.e. the mere material discharge, its dosing and transfer.

To carry out the discharge, usually into an open container 30, with reference to Figs. 1 and 2, the discharge opening 11 of the container 1 that has to be emptied, is initially closed by the cone valve 13 sealed against the seal 12. The openings of the two containers are overlapped and, to carry out the discharge into the container 30 (Fig. 2) under the drive of the actuator 16, the cone of the valve 13 is lowered thus creating an annular passage from which the product can flow out. When all product is discharged, the cone 13 rises back closing the discharge opening again.

The dosing operation (see Figs. 1, 3A and 3B) is obtained by adjusting the path (A1 and A2) and the frequency of rising/lowering movements of the cone 13.

To obtain the product transfer 3, with reference to Figs. 1, 4 and 5, the container 2 receiving the product is initially closed by the conical or frusto-conical cap 23, which is pushed upwards against the seal. When the cap is lifted, the container is closed, when the cap is lowered, there is an annular opening through which it can receive the product.

The closing conical-shaped cap 23 can be directly mounted on the container 2 or on a lid closing the container.

Referring to Fig. 4 the container 1 has been lowered onto container 2, or container 2 has been lifted up to container 1. In this way, the two seals 12 and 22 are sealed and the cone 13 of the container 1 is in contact with the cap 23 of the container 2.

Referring to Fig. 5, always with seals 12 and 22 well sealed, the cone 13 housed in the container 1 falls, until it comes into contact with the cap 23 and, going on with the path, it pushes it inside the container 2, thus opening the corresponding opening 21. During this phase, the product is transferred from container 1 to container 2. When the cone-shaped valve rises back to close the opening 11, the return means 25 push the cap 23 until it closes the opening 21. By adjusting the movement path and frequency, the total discharge or the dosing during the discharge with a succession of transfers is obtained.

Even though the invention has been shown with reference to favourite constructions, it is susceptible of other applications and changes that are included in the protective field, as it will be clear to the skilled technician.

## Claims

1. Product discharge and dosing device between two containers, including
- a first upper container (1) containing flowable material (3), equipped with a first opening (11),
- a second lower container (2) equipped with a second opening (21),
- a valve (13) housed in said first container (1), movable from a closing position to a partial opening position of said first opening (11), said opening movement occurring in a direction outwards the first container (1),
- a cap (23) housed in said second container (2), movable from a closing position to a partial opening position of said second opening (21), the opening movement of said cap (23) occurring inwards the second container (2),
- return means (25) housed in said second container (2) and able to bring back said cap (23) in the closing position,
**characterised in that** the valve (13) closing said first opening (11) of the first container (1) is a cone-shaped valve and the cap (23) of the second container (2) is driven in the opening direction by said cone-shaped valve (13) coming into contact with the cap (23) during its opening movement outwards the first container (1), with the return means (25) bringing back said cap (23) in the closing position when the cone-shaped valve (13) concludes its work.

2. Device according to claim 1, **characterised in that** first peripheral seal means (12) are arranged on the edge of the first container (1).

3. Device according to claim 1, **characterised in that** during its opening movement the cone-shaped valve (13) opens the cap (23) by overcoming the strength of said return means (25).

4. Device according to claim 2, **characterised in that** the second container (2) has second peripheral seal means (22) cooperating with said first peripheral seal means (12) in order to prevent the environment and/or material from being contaminated during the transfer from said first container (1) to the second container (2), and **in that** said cap (23) in the second container (2) is abutted against said second peripheral seal means (22) in said closing position.

5. Device according to claim 1, **characterised in that** the return means (25) are chosen from the group formed by mechanical actuators, with gas spring, using a compressed air system.

6. Device according to claim 1, **characterised in that** the cap (23) has at least a superficial conical portion.

7. Device according to claim 1, **characterised in that** means for the opening path adjustment of said cone-shaped valve are.

8. Device according to claim 1, **characterised in that**,means for the repetition with prefixed frequency of an opening/closing cycle of said cone-shaped valve are provided.

## Patentansprüche

1. Vorrichtung zum Produkt- Auslauf und Dosierung zwischen zwei Behaeltem, einschliessend:
- ein erster Oberbehaelter (1) enthaelt fliessendes Material (3) und ist mit einer ersten Oeffnung (11) ausgeruestet,
- ein zweiter Unterbehaelter (2) ist mit einer zweiten Oeffnung (21) ausgeruestet,
- ein Ventil (13) ist im ersten besagten Behaelter (1) untergebracht, bewegbar vom einen Verschluss-Stand auf einen Teiloeffnungs-Stand der besagten ersten Oeffnung (11), die besagte Oeffnungsbewegung erfolgt nach aussen in die Richtung des ersten Behaelters (1),
- ein Deckel (23) ist im besagten zweiten Behaelter (2) untergebracht, bewegbar vom einen Verschluss-Stand auf einen Teiloeffnungs-Stand der besagten zweiten Oeffnung (21), die Oeffnungsbewegung des besagten Deckels (23) erfolgt nach innen in die Richtung des zweiten Behaelters (2),
- Ruecklauf-Vorrichtungen (25) sind im besagten zweiten Behaelter (2) untergebracht und sind faehig, den besagten Deckel (23) in den Verschluss-Stand zurueckzubringen, **gekennzeichnet** in dem das Ventil (13) die besagte erste Oeffnung (11) des ersten Behaelters (1) schliesst; es ist ein Kegelventil und der Deckel (23) des zweiten Behaelters (2) wird in die Oeffnungsrichtung vom besagten Kegelventil (13) gebracht und beruehrt den Deckel (23) waehrend seiner Oeffnungsbewegung ausserhalb dem ersten Behaelter (1), mit den Ruecklauf-Vorrichtungen (25), die den besagten Deckel (23) in die Verschlussstellung zurueckbringen, wenn das Kegelventil (13) seine Arbeit beendet hat.

2. Vorrichtung nach Anspruch 1, **gekennzeichnet** in dem, die ersten Phaeripherie-Dichtungseinsaetzen (12) auf der Ecke des ersten Behaelters (1) untergebracht sind.

3. Vorrichtung nach Anspruch 1, **gekennzeichnet** in dem, waehrend seiner Oeffnungsbewegung, oeffnet das Kegelventil (13) den Deckel (23), indem die Kraft der besagten Ruecklauf-Vorrichtungen (25) ueberschritten wird.

4. Vorrichtung nach Anspruch 2, **gekennzeichnet** in dem, der zweite Behaelter (2) mit zweiten Phaeripherie- Dichtungseinsaetzen (22) ausgeruestet ist, die mit den ersten besagten Phaeripherie-Dichtungseinsaetzen (12) zusammenarbeiten, um die Umwelt- bzw. Produktverschmutzung waehrend Uebertragung vom ersten besagten Behaelter (1) in den zweiten Behaelter (2) zu vermeiden und in dem der besagte Deckel (23) im zweiten Behaelter (2) an die zweiten besagten Phaeripherie-Dichtungseinsaetzen (22) in der besagten Verschlussstellung angelegt ist.

5. Vorrichtung nach Anspruch 1, **gekennzeichnet** in dem, die Ruecklaufvorrichtungen (25) durch Druckluftsystem von der Gruppe gewaehlt werden, die aus mechanischen Aktuatoren mit Gas-Feder besteht.

6. Vorrichtung nach Anspruch 1, **gekennzeichnet** in dem, der Deckel (23) einen konischen Oberflaechenteil hat.

7. Vorrichtung nach Anspruch 1, **gekennzeichnet** in dem, die Elemente zur Einstellung der Oeffnungsspur des besagten Kegelventils vorhanden sind.

8. Vorrichtung nach Anspruch 1, **gekennzeichnet** in dem, die Elemente zur Wiederhloung einer voreingestellten Frequenz des Offnungs-/Verschluss-Zyklus des besagten Kegelventils vorhanden sind.

## Revendications

1. Dispositif pour le déchargement et le dosage de produit entre deux containers, inclure:
- premier container supérieur (1) remplis avec du matériel coulant (3) équipé avec une première ouverture (11),
- deuxième container inférieur (2) équipé avec une deuxième ouverture (21),
- une valve (13) situé dans dit premier container (1), mobile d'une position de fermeture à une position de partielle ouverture de dans dit première ouverture (11), dans dit mouvement d'ouverture se vérifie vers l'extérieur dans la direction du premier container (1),
- un couvercle (23), situé dans dit deuxième container (2), mobile d'une position de fermeture à une position de partielle ouverture de dans dit deuxième ouverture (21), le mouvement d'ouverture de dans dit couvercle (23) se vérifie vers l'intérieur du deuxième container (2),
- dispositifs de renvois (25) situé dans le dans dit deuxième container (2) en mesure de reporter arrière dans dit couvercle (23) dans la position de fermeture, **caractérisé en ce que** la valve (13) qui ferme dans dit première ouverture (11) du premier container (1) est une valve en forme de cône et le couvercle (23) du deuxième container (2) est conduit dans la direction d'ouverture par la dite valve en forme de cône (13) en venant en contact avec le couvercle (23) pendant son mouvement d'ouverture vers le premier container (1), avec le dispositifs de renvois (25) portent en arrière dans dit couvercle (23) dans la position de fermeture quand la valve en forme de cône (13) a terminé son travail.

2. Dispositif selon la revendication 1, **caractérisé en ce que** les premiers dispositifs d'étanchéités périphériques (12) sont situé sur le coin du premier container (1).

3. Dispositif selon la revendication 1, **caractérisé en ce que** pendant son mouvement d'ouverture la valve en forme de cône (13) ouvre le couvercle (23) en surmontand la force des dispositifs de renvois (25).

4. Dispositif selon la revendication 2, **caractérisé en ce que** le deuxième container (2) est doté des deuxièmes dispositifs d'étanchéités périphériques (22) qui en coopérant avec le dans dit premiers dispositifs de d'étanchéités (12) préviennent la contamination du milieu et/or du produit pendant le déplacement du dans dit premier container (1) au deuxième container (2), le dans dit couvercle (23) dans le deuxième container (2) est appuyé sur les dans dit deuxièmes dispositifs d'étanchéités périphériques (22) dans la dans dit position de fermeture.

5. Dispositif selon la revendication 1, **caractérisé en ce que** les dispositifs de renvois (25) sont choisit entre le groupe constitué des déclencheurs mécaniques, avec ressort à gaz, en utilisant une système d'air comprimé.

6. Dispositif selon la revendication 1, **caractérisé en ce que** le couvercle (23) a une partie conique superficiel.

7. Dispositif selon la revendication 1, **caractérisé en ce que** des moyen pour l'adjustement de chemin d'ouverture sont dans dit valve en forme de cône.

8. Dispositif selon la revendication 1, **caractérisé en ce que** des moyen pour la répétition avec une fréquence mise en tête d'une cycle ouverture/ fermeture de la soupape conique sont fournis.
